**Europäisches Patentamt**

**European Patent Office**

**Office européen des brevets**

(19)

(11) Publication number: **0 033 197**
**A2**

(12) # EUROPEAN PATENT APPLICATION

(21) Application number: **81300108.8**

(22) Date of filing: **12.01.81**

(51) Int. Cl.³: **A 23 K 1/18**
**A 23 K 1/16**

(30) Priority: **25.01.80 IL 59221**

(43) Date of publication of application:
**05.08.81 Bulletin 81/31**

(84) Designated Contracting States:
**BE DE FR GB NL**

(71) Applicant: **YEDA RESEARCH AND DEVELOPMENT COMPANY, LTD.**
**Weizmann Institute of Science Herzl Street at Yavne Road**
**Rehovot(IL)**

(72) Inventor: **Edelstein, Samuel**
**7, Shimoni Street**
**Rehovot(IL)**

(72) Inventor: **Mazur, Yehuda**
**14, Haknesset Hagdola Street**
**Tel-Aviv(IL)**

(74) Representative: **Harrison, David Christopher et al,**
**MEWBURN ELLIS & CO 70 & 72 Chancery Lane**
**London WC2A 1AD(GB)**

(54) Method of improving the shell quality of poultry eggs.

(57) A method of improving the shell quality of poultry eggs so as to increase their resistance against cracking and breakage which consists in the administration to the laying hens of 24R,25-dihydroxy-cholecalciferol (24R,25(OH)$_2$D$_3$) and either 1$\alpha$-hydroxy-cholecalciferol (1$\alpha$ (OH)D$_3$) or 1$\alpha$,25-dihydroxy-cholecalciferol (1$\alpha$,25(OH)$_2$D$_3$).

EP 0 033 197 A2

- 1 -

Method of improving the shell quality of poultry eggs

This invention relates to a method of improving the resistance of poultry egg shells against cracking and breakage, which comprises administering to the laying birds a certain combination of hydroxylated derivatives of Vitamin $D_3$ (cholecalciferol).

The proportion of eating eggs which have to be downgraded because of cracked shells and those lost by breaking is of major commercial importance when the astronomical number of eating eggs produced annually is taken into account. This problem has been extensively studied in recent years and among the various remedies proposed, the majority consisted in supplementation of certain dietary factors in the feed of the laying poultry. The main ones of these supplementary dietary factors, the effects of which on the thickness, weight and quality of the eggshells have been studied, were calcium, phosphorus and Vitamin $D_3$ (cf., inter alia, J.D. Summers et al, Poultry Science 55 pp 402-413 (1976); and

Pran Vohra et al, Poultry Science 58 pp 432-440 (1979) and references mentioned therein).

The importance of Vitamin $D_3$ for normal calcium homeostasis has been established and its requirements for optimal egg production parameters in the laying hens have been investigated. In recent years it has been shown that the biological effects of Vitamin $D_3$ (or Cholecalciferol) in promoting calcium absorption from the intestine and mobilisation of calcium in the bone, are due to hydroxylated metabolites of Vitamin $D_3$, in particular $1\alpha$ 25-dihydroxy Vitamin $D_3$ (hereinafter "$1\alpha,25(OH)_2D_3$), formed in the body by 25-hydroxylation of Vitamin $D_3$ in the liver followed by $1\alpha$-hydroxylation in the kidney. The same metabolite $1\alpha,25(OH)_2D_3$ is formed by 25-hydroxylation in the liver of the synthetic analogue $1\alpha$-hydroxycholecalciferol (hereinafter "$1\alpha(OH)D_3$") when this is administered to the body. While the biological activity of the aforementioned biologically active Vitamin $D_3$ derivatives has been extensively studied in the last decade, there have been only comparatively few and mostly inferential reports of biological activity of another dihydroxylated metabolite of Vitamin $D_3$, namely 24R,25-dihydroxy-cholecalciferol (hereinafter "$24R,25(OH)_2D_3$"), reported to have an effect on bone mineralisation (cf. H.L. Henry and A.W. Norman, Science , Vol. 201, pp 835-837 (1978) ).

The effects of various vitamin $D_3$ metabolites on the egg production parameters in laying hens have also been studied. In most of these studies, said metabolites were administered to hens fed on Vitamin $D_3$-defficient diets, i.e. dietary Vitamin $D_3$ was replaced (rather than supplemented) by $25(OH)D_3$, $1\alpha,25(OH)_2D_3$ or by the analogue $1\alpha(OH)D_3$. The results, as far as egg shell quality or thickness are concerned, were far from satisfactory (cf. summary in S.M. Abdulrahim et al, Poultry Science 58 pp 858-863 (1979)).Whilst some of the earlier studies reported a beneficial effects of $25(OH)D_3$ and $1\alpha(OH)D_3$ on eggshell quality (cf., e.g. US Patent 4,012,509 and the corresponding British Patent 1,467,205),as compared to Vitamin $D_3$, these findings could not be substantiated in more recent studies. Similarly, the effects of $1\alpha,25(OH)_2D_3$ and other vitamin $D_3$ derivatives on egg shell quality and shell weight were found to be merely comparable to the case of Vitamin $D_3$ itself, even at higher levels of adminstration of these hydroxylated vitamin D derivatives.

Summing up, it can be stated that all the hitherto efforts to increase the resistance of the egg shell to cracking and breakage by supplementing the feed of the poultry, have not resulted in any method yielding a measurable reduction in the proportion of cracked eggs.

It has now been surprisingly found, in accordance with the present invention, that the shell quality of poultry eggs can be significantly improved by administering to the laying

- 4 -

birds, while being fed on a normal Vitamin $D_3$ containing diet, an effective amount of $24,25(OH)_2D_3$ in combination with an $1\alpha$-hydroxylated Vitamin $D_3$ derivative, i.e. $1\alpha,25(OH)_2D_3$ or its precursor $1\alpha(OH)D_3$.

The present invention thus provides a method of improving the shell quality of poultry eggs so as to increase their resistance against cracking and breakage, which comprises administering to the laying birds an effective amount of $24R,25(OH)_2D_3$ in combination with a effective amount of $1\alpha(OH)D_3$ and/or $1\alpha,25(OH)_2D_3$ .

The combination of active vitamin $D_3$ derivatives , in accordance with the invention, is most conveniently administered to the laying birds in their feed. Applicants have found that in order to achieve significant improvement of the egg shell quality, each laying bird should preferably receive from about $2\mu g$ to about 4 g of $24R,25(OH)_2D_3$ and from about $0.5\mu g$ to about 1.0 µg of $1\alpha(OH)D_3$ or a similar amount of $1\alpha,25(OH)_2D_3$ per day. Since the daily feed consumption of a laying hen is about 100g, it follows that the aforementioned active vitamin $D_3$ derivatives should be added to the poultry feed in the preferable amounts of from 20 to 40 µg of $24R,25(OH)_2D_3$ and from 5µg to 10 µg of $1 (OH)D_3$ or $1\alpha,25(OH)_2D_3$ per each kg. of feed.

The invention is not limited, however, to the aforementioned method of adminstration, i.e. in the feed, of the active vitamin $D_3$ derivatives, but extends to any other feasible manner of administration, e.g. in the drinking water

— 5 —

of the poultry, by intramuscular injection of long acting preparations of the combination of active vitamin $D_3$ derivatives, or by subcutaneous implantation of pellets comprising such preparations in slow-release form.

The invention will now be described in more detail with the aid of the following non-limiting example:

EXAMPLE

Groups of 25 laying hens each, of Leghorn breed, aged 6 to 7 months, were allowed free access to water and feed consisting of a normal diet with the following supplements (per 1 kg of feed):

Control groups 1 and 7 - no feed supplements.

Group No. 2 - $1\alpha(OH)D_3$  5 µg

Group No. 3 - $1\alpha,25(OH)_2D_3$  5 µg

Group No. 4 - $24R,25(OH)_2D_3$  20 µg

Group No. 5 - $1\alpha(OH)D_3$  5 µg and $24R,25(OH)_2D_3$  20 µg

Group No. 6 - $1\alpha,25(OH)_2D_3$  5 µg and $24R,25(OH)_2D_3$  20 µg

Group No. 8 - $1\alpha(OH)D_3$  10 µg

Group No. 9 - $1\alpha,25(OH)_2D_3$  10 µg

Group No.10 - $24R,25(OH)_2D_3$  40 µg

Group No.11 - $1\alpha(OH)D_3$  10 µg and $24R,25(OH)_2D_3$  40 µg

Group No.12 - $1\alpha 25(OH)_2D_3$  10 µg and $24R,25(OH)_2D_3$  40 µg

Eggs were collected starting from the 6th day after the beginning of treatment and collection was continued for 3 weeks. The resistance of the egg shells against cracking was assayed by measuring egg shell deformation under predetermined mechanical stresses as follows:

Deformation of the egg shell was measured on each egg using an apparatus comprising a micrometer. A stress of 1 kg and 2 kg, respectively, was applied to the egg between two opposite points on its longest diameter, and the resulting deformations were read on the micrometer scale. In preliminary experiments it has been determined that the deformation of the egg shell (e.g. at 2 kg stress) is inversely proportional to the resistance of the egg shell against cracking. Thus, shells which at 2 kg stress underwent deformations of about 0.07 to 0.08 mm, cracked at pressures of about 3.5 kg, whereas eggs which at 2 kg stress deformed only by about 0.05 to 0.06 mm started cracking only at stresses of about 4.5 kg.

The results of the various experiments are summarised in the following Table I:

## TABLE I

| Test Group No. | Supplement to normal diet $\mu g$ per 1 kg of feed | | | Average shell deformation mm $10^{-2}$ | |
|---|---|---|---|---|---|
| | $1\alpha(OH)D_3$ | $1\alpha,25(OH)_2D_3$ | $24R,25(OH)_2D_3$ | Under 1 kg stress | Under 2 kg stress |
| 1 (control) | — | — | — | 3.28 | 6.76 |
| 2 | 5 | — | — | 3.00 | 6.70 |
| 3 | — | 5 | — | 3.11 | 6.72 |
| 4 | — | — | 20 | 3.26 | 6.88 |
| 5 | 5 | — | 20 | 2.87 | 6.00 |
| 6 | — | 5 | 20 | 2.80 | 5.96 |
| 7 (control) | — | — | — | 4.15 | 8.28 |
| 8 | 10 | — | — | 3.66 | 7.42 |
| 9 | — | 10 | — | 3.61 | 7.78 |
| 10 | — | — | 40 | 3.71 | 7.61 |
| 11 | 10 | — | 40 | 2.70 | 5.87 |
| 12 | — | 10 | 40 | 2.83 | 5.84 |

As can be seen from the results in Table I above, no significant changes in egg shell deformation, as compared to the control groups, could be observed when the laying hens were fed on a diet supplemented with only a single one of the three tested vitamin $D_3$ derivatives, at both the lower and higher levels of administration. Against this, when the diet was supplemented with the combination of $24R,25(OH)_2D_3$ and either $1\alpha(OH)D_3$ or $1\alpha,25(OH)_2D_3$ a significant decrease in the deformation of the egg shells was observed at both levels of administration. Thus, in accordance with the findings in the aforementioned preliminary experiments, it would follow that eggs produced by hens fed on a diet supplemented with either the lower or the higher level of the combination according to the invention, should resist cracking under stresses of up to about 4.5 kg, whereas eggs produced by the untreated hens of the control group (particularly group No. 7) would crack already at stresses of about 3.5 kg.

0033197

CLAIMS

1. A method of improving the shell quality of poultry eggs, which comprises administering to the laying birds (i) 24R, 25-dihydroxycholecalciferol (hereinafter "24R,25(OH)$_2$D$_3$") and (ii) 1$\alpha$-hihydroxycholecalciferol (hereinafter "1$\alpha$(OH)D$_3$") or 1$\alpha$, 25-dihydroxycholecalciferol (hereinafter "1$\alpha$,25(OH)$_2$D$_3$").

2. A method according to claim 1 wherein the poultry are chicken.

3. A method according to claim 1 or claim 2 wherein the said compounds are administered in the feed of the poultry.

4. A method according to claim 3 wherein from 20 to 40 µg of 24R,25(OH)$_2$D$_3$ and from 5 to 10 µg of 1$\alpha$(OH)D$_3$ are added to each kg of feed.

5. A method according to claim 3 wherein from 20 to 40 µg of 24R,25(OH)$_2$D$_3$ and from 5 to 10 µg of 1$\alpha$,25(OH)$_2$D$_3$ are added to each kg of feed.

6. A method according to any one of the preceding claims wherein the dosage of the said compounds per bird per day administered is from about 2 µg to about 4 µg of 24,25(OH)$_2$D$_3$ and from about 0.5 µg to about 1 µg of 1$\alpha$(OH)D$_3$ or 1$\alpha$,25(OH)$_2$D$_3$.